(19) Europäisches Patentamt
European Patent Office
Office européen des brevets

(11) Publication number: 0 143 829 B1

(12) # EUROPEAN PATENT SPECIFICATION

(45) Date of publication of patent specification: 02.09.87

(51) Int. Cl.$^4$: **B 32 B 27/04**, C 08 G 69/44, C 09 J 3/12

(21) Application number: 84902143.1

(22) Date of filing: 04.05.84

(86) International application number: PCT/US84/00679

(87) International publication number: WO 84/04490 22.11.84 Gazette 84/27

(54) **BONDING COMPOSITIONS FOR POLYESTER-POLY(VINYL ALCOHOL) LAMINATES.**

(30) Priority: 19.05.83 US 496343
19.05.83 US 496344
19.05.83 US 496345

(43) Date of publication of application: 12.06.85 Bulletin 85/24

(45) Publication of the grant of the patent: 02.09.87 Bulletin 87/36

(84) Designated Contracting States: BE CH DE FR GB LI NL

(56) References cited:
EP-A-0 117 622
FR-A-2 325 674
GB-A-2 067 131

(73) Proprietor: EASTMAN KODAK COMPANY
343 State Street
Rochester New York 14650 (US)

(72) Inventor: FAGERBURG, David, Richard
3812 Cimmaron Drive
Kingsport, TN 37664 (US)
Inventor: SHEPHERD, Freddie, Allen
312 Woodcrest Drive
Kingsport, TN 37663 (US)
Inventor: WRIGHT, Benny, Wayne
Rt. 4, P. O. Box 330E
Bluff City, TN 37618 (US)
Inventor: SAND, Irving, Daniel
Rt. 2, P.O. Box 441
Jonesboro, TN 37659 (US)

(74) Representative: Baron, Paul Alexander Clifford et al
Kodak Limited Patent Department Headstone Drive
Harrow Middlesex HA1 4TY (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 143 829 B1

## Description

This invention relates to bonding compositions for laminates comprising polyester or copolyesters bound to poly(vinyl alcohol) or copolymers thereof. The laminates are characterized by greatly improved gas barrier properties and are therefore useful for containers for edible materials.

U.S. Patent No. 4,261,473 discloses multilayer structures useful as packaging materials. Particularly, this patent discloses molded containers having a barrier layer interposed between layers of a thermoplastic polyester resin. The barrier layer typically is a blend of polymers such as ethylene-vinyl alcohol copolymer and polyethylene terephthalate or a polyamide polymer. These containers may be fabricated from a coextruded pipe of five layers comprising for example a polymer outer layer, bonding layer, a barrier layer, bonding layer and a polymer inner layer.

EP—A—0 117 622 published on 5 September 1984 and falling within the terms of Article 54(3) EPC discloses a multi-layer plastic structure comprising a layer of a polyester composed mainly of ethylene terephthalate units or butylene terephthalate units and a gas barrier layer containing an olefin-vinyl alcohol copolymer, said two layers being laminated together through a layer of a thermoplastic resin adhesive containing ester groups and amide groups.

FR—A—2 325 674 describes a method of preparing poly(esteramides).

Other laminates for packaging materials are disclosed in U.S. Patent 3,595,740. U.S. Patent 3,849,514 discloses that certain block polyesterpolyamide copolymers are useful adhesives. However, none of the prior art references suggests the solution to the problem solved by the present invention.

One particularly desirable laminate from a cost and ease of formation standpoint would be a thermally formable laminate wherein a polyester or copolyester, e.g., poly(ethylene terephthalate) is bonded to poly(vinyl alcohol) or polymers thereof. The problem is that, with the adhesives of the prior art, these laminates tend to delaminate when thermally formed. As a result, gas barrier properties are greatly reduced and the appearance of the resulting article is adversely affected. Thus, the object of the present invention is to provide a bonding composition which will eliminate this delamination problem.

This problem is solved by a bonding composition for bonding polyesters and copolyesters to poly(vinyl alcohol) and copolymers thereof to form a laminate

characterized in that the bonding composition comprises a poly(esteramide) having

a) a thin film deformation temperature transition which is

1) greater than 70°C

2) not greater than 50°C lower nor 25°C higher than the glass transition temperature of the polyester or copolyester to be bonded and

b) a T-peel strength in the laminate of at least 19.6 N/m (.02 kg/cm).

The thin film deformation temperature transition for the poly(esteramide) bonding composition is that temperature at which a weighted sample of the film deforms in a thermomechanical analyzer. More particularly, the deformation transition is the temperature corresponding to the intersection of the straight line portions of a deflection vs. temperature curve for a thin film of the polymer. The measurement is preferably made on a sample of the film having a thickness of between .02 mm and .08 mm loaded to $3.43\times10^5$ N/m$^2$ (3.5 kg/cm$^2$) tensile stress and heated at a rate of 20°C per minute.

The T-peel strength is measured according to ASTM D1876.

A variety of poly(ester amides) have been tested and have been found to meet the above criteria. Preferred poly(ester amide) bonding compositions include:

I. Poly(esteramides) having an inherent viscosity of at least 0.45 dl/g, said poly(esteramide) containing 1) repeating units derived from an acid component which is at least 80 mol percent of a dicarboxylic acid selected from pimelic, azelaic, sebacic acid or combinations thereof and optionally up to 20 mol percent of an additional linear aliphatic dicarboxylic acid having at least four carbon atoms connected linearly between the two acid groups or an aromatic dicarboxylic acid and 2) repeating units derived from a diamine and glycol component which is from 5 mol percent to 20 mol percent of 1,2-ethanediamine and from 95 to 80 mol percent of a glycol selected from ethylene glycol, 1,4-butanediol, 1,4-cyclohexanedimethanol or combinations thereof. It is preferred that the repeating units from pimelic, azelaic or sebacic acid be present in the amount of 85 to 100 mol percent. It is most preferred that the repeating units from a dicarboxylic acid be from azelaic acid and be present in the amount of 100 mol percent. Also it is preferred that the repeating units from the 1,2-ethanediamine are present in the amount of 5 to 15 mol percent. It is preferred that the repeating units from a glycol be from 1,4-butanediol and be present in the amount of 95 to 85 mol percent.

The diamine useful in the production of the poly(esteramides) of this group is restricted to 1,2-ethanediamine. The diacid must be pimelic, azelaic or sebacic at ≥80 mol percent. The remaining portion of the diacid (which is used to make the amide segment) may be a linear aliphatic dicarboxylic acid or an aromatic dicarboxylic acid. Aliphatic dicarboxylic acids may have no fewer than four carbon atoms connected linearly between the two acid groups. Acids such as adipic, suberic, sebacic, and 1,12-dodecanedioic acid, and 1,4-cyclohexanedicarboxylic acid are preferred modifying aliphatic acids. Preferred aromatic modifying acids are terephthalic and isophthalic acids. The preferred diacid for the poly(esteramide) is azelaic acid as the sole diacid.

Useful glycols are ethylene glycol, 1,4-butanediol and 1,4-cyclohexanedimethanol and mixtures

thereof. Preferred is the use of one of these glycols as the sole glycol. Preferred as such sole glycols are 1,4-butanediol and 1,4-cyclohexanedimethanol.

These diols, in combination with the allowed diacid, result in a low melting polyester segment having a low glass transition temperature. This overall combination of a crystalline polyamide and low Tg polyester gives poly(esteramides) that are elastomeric in nature.

The inherent viscosity of the poly(esteramide) must be at least about 0.45 dl/g and preferably at least 0.50 dl/g. The exact I.V. above 0.45 dl/g needed is actually determined generally by the desired polymer melt viscosity. In general, the melt viscosity of the poly(esteramide) at its processing temperature should not be different from the polyester by a factor of more than about 3 for a flat film coextrusion on a feed block system or a factor of more than about 10 for a multilayer pipe or multimanifold film coextrusion.

The poly(esteramides) of this group can be made in such a fashion as to produce some degree of blocking, i.e. deviation from ideal randomness. This is, however, not essential to obtaining useful properties for the product poly(esteramide).

II. Poly(esteramides) having an inherent viscosity of at least 0.8 dl/g, said poly(esteramide) containing 1) repeating units derived from an acid component which is at least 70 mol percent of a dicarboxylic acid selected from pimelic, azelaic, sebacic acid or combinations thereof and optionally up to 30 mol percent of an additional linear aliphatic dicarboxylic acid having at least four carbon atoms connected linearly between the two acid groups or an aromatic dicarboxylic acid and 2) repeating units derived from a diamine and glycol component which is from 10 mol percent to 30 mol percent of a diamine selected from 1,6-hexanediamine, 1,4-cyclohexanebismethylamine or combinations thereof and from 90 to 70 mol percent of a glycol selected from ethylene glycol, 1,4-butanediol, 1,4-cyclohexanedimethanol or combinations thereof. It is preferred that the repeating units from pimelic, azelaic or sebacic acid be present in the amount of 75 to 100 mol percent. It is most preferred that the repeating units from a dicarboxylic acid be from azelaic acid and be present in the amount of 100 mol percent. Also it is preferred that the repeating units from a diamine are present in the amount of 15 to 25 mol percent. It is more preferred that the repeating units from a diamine be from 1,6-hexanediamine in the amount of 15 to 25 mol percent. It is preferred that the repeating units from a glycol be from 1,4-butanediol and be present in the amount of 85 to 75 mol percent.

The diamines useful in the production of the poly(esteramides) of this second group are restricted to 1,6-hexanediamine and 1,4-cyclohexanebismethylamine. The diacid must be pimelic, azelaic or sebacic at $\geq$70 mol percent. The remaining portion of the diacid (which is used to make the amide segment) may be a linear aliphatic dicarboxylic acid or an aromatic dicarboxylic acid. Aliphatic dicarboxylic acids may have no fewer than four carbon atoms connected linearly between the two acid groups. Acids such as adipic, suberic, sebacic, and 1,12-dodecanedioic acid, and 1,4-cyclohexanedicarboxylic acid are preferred modifying aliphatic acids. Preferred aromatic modifying acids are terephthalic and isophthalic acids. The preferred diacid for the poly(esteramide) is azelaic acid as the sole diacid.

Useful glycols are ethylene glycol, 1,4-butanediol, and 1,4-cyclohexanedimethanol and mixtures thereof. Preferred is the use of one of these glycols as the sole glycol. Preferred as such sole glycols are 1,4-butanediol and 1,4-cyclohexanedimethanol.

These diols, in combination with the allowed diacid, result in a low melting polyester segment having a low glass transition temperature. This overall combination of a crystalline polyamide and low Tg polyester gives poly(esteramides) that are elastomeric in nature.

The inherent viscosity of the poly(esteramide) must be at least about 0.8 dl/g and preferably at least 1.0 dl/g and more preferably at least 1.1 dl/g. The exact I.V. above 0.8 dl/g needed is actually determined generally by the desired polymer melt viscosity. In general, the melt viscosity of the poly(esteramide) at its processing temperature should not be different from the polyester by a factor of more than about 3 for a flat film coextrusion on a feed block system or a factor of more than about 10 for a multilayer pipe or multimanifold film coextrusion.

The poly(esteramides) of this group can also be made in such a fashion as to produce some degree of blocking, i.e. deviation from ideal randomness. This is, however, not essential to obtaining useful properties for the product poly(esteramide).

III. Poly(esteramides) having an inherent viscosity of at least 0.8 dl/g, said poly(esteramide) containing 1) repeating units derived from an acid component which is 70 to 90 mol percent of a dicarboxylic acid selected from adipic, pimelic, suberic, azelaic or sebacic acid and 10 to 30 mol percent of a second linear aliphatic dicarboxylic acid having at least four carbon atoms connected linearly between the two acid groups or an aromatic dicarboxylic acid and 2) repeating units derived from a diamine and glycol component which is from 10 mol percent to 30 mol percent of a diamine selected from 1,6-hexanediamine, 1,4-cyclohexanebismethylamine or combinations thereof and from 90 to 70 mol percent of a glycol selected from ethylene glycol, 1,4-butanediol, 1,4-cyclohexanedimethanol or combinations thereof. The repeating units from the second linear aliphatic dicarboxylic acid and repeating units from the diamine are preferably present in equal molar amounts. It is preferred that the repeating units from adipic, pimelic, suberic, azelaic or sebacic acid be present in the amount of 75 to 85 mol percent also it is preferred that the repeating units from a diamine are present in the amount of 15 to 25 mol percent. It is more preferred that the repeating units from a diamine be from 1,6-hexanediamine in the amount of 15 to 25 mol percent. It is preferred that

the repeating units from a glycol be from 1,4-butanediol and be present in the amount of 85 to 75 mol percent.

The diamines useful in the production of the poly(esteramides) of this third group are restricted to 1,6-hexanediamine and 1,4-cyclohexanebismethylamine. The diacid must be adipic, pimelic, suberic, azelaic or sebacic at 70 to 90 mol percent. The remaining portion of the diacid (which is used to make the amide segment) may be a linear aliphatic dicarboxylic acid or an aromatic dicarboxylic acid. Aliphatic dicarboxylic acid may have no fewer than four carbon atoms connected linearly between the two acid groups. Acids such as adipic, suberic, sebacic, and 1,12-dodecanedioic acid, and 1,4-cyclohexanedicarboxylic acid are preferred modifying aliphatic acids. Preferred aromatic modifying acids are terephthalic and isophthalic acids.

Useful glycols are ethylene glycol, 1,4-butanediol, and 1,4-cyclohexanedimethanol and mixtures thereof. Preferred is the use of one of these glycols as the sole glycol. Preferred as such sole glycols are 1,4-butanediol and 1,4-cyclohexanedimethanol.

These diols, in combination with the allowed diacid, result in a low melting polyester segment having a low glass transition temperature. This overall combination of a crystalline polyamide and low Tg polyester gives poly(esteramides) that are elastomeric in nature.

The inherent viscosity of the poly(esteramide) must be at least about 0.8 dl/g and preferably at least 1.0 dl/g and more preferably at least 1.1 dl/g. The exact I.V. above 0.8 dl/g needed is actually determined generally by the desired polymer melt viscosity. In general, the melt viscosity of the poly(esteramide) at its processing temperature should not be different from the polyester by a factor of more than about 3 for a flat film coextrusion on a feed block system or a factor of more than about 10 for a multilayer pipe or multimanifold film coextrusion.

The poly(esteramides) of this group can also be made in such a fashion as to produce some degree of blocking, i.e. deviation from ideal randomness. This is, however, not essential to obtaining useful properties for the product poly(esteramide).

This invention includes laminates and shaped articles made from the laminates comprising a polyester (or copolyester) polymer layer and a poly(vinyl alcohol) (or copolymer thereof) barrier layer, the layers being bonded together with bonding compositions of this invention. It is preferred that the barrier layer be an ethylene-vinyl alcohol copolymer having an ethylene content of 30 to 50 mol percent. The shaped article may be an oriented film or an oriented bottle.

Preferably the laminate includes an outer layer of poly(ethylene terephthalate), a barrier layer of an ethylene-vinyl alcohol copolymer, and an inner layer of poly(ethylene terephthalate), the respective layers being bonded together by bonding composition layers of the described bonding composition disposed between the outer layer and the barrier layer and the inner layer and the barrier layer.

A preferred form of the laminate is a coextruded tubular structure comprising an outer layer of poly(ethylene terephthalate), a barrier layer of ethylene-vinyl alcohol copolymer and an inner layer of poly(ethylene terephthalate), the layers being bonded together by a bonding composition layer of the composition of this invention disposed between the outer layer and the barrier layer and the inner layer and the barrier layer. The tubular structure may be formed into a parison or preform for blowing beverage bottles.

The polyester polymers suitable for this invention include poly(ethylene terephthalate) and modifications thereof with aliphatic glycols containing from 3 to 12 carbon atoms. These may be either linear or branched and may contain ring structures. Examples of especially useful modifying glycols are 1,4-butanediol, 1,6-hexanediol, 1,4-cyclohexanedimethanol, and neopentyl glycol. The poly(ethylene terephthalate) may also be modified with diacids. Aliphatic and aromatic diacids may be used. Especially useful as a modifying diacid is isophthalic acid.

Generally, either the diol or diacid modifier may be used at up to about 50 mol % but the most useful materials are those where orientation can be developed by deforming heated articles, thereby restricting the useful modification level to about 15 mol % and below.

Other polyesters or copolyesters may be used in this invention besides poly(ethylene terephthalate). A particularly useful group of copolyesters is the one based on 1,4-cyclohexanedicarboxylic acid, 1,4-cyclohexanedimethanol, and poly(tetramethylene oxide) glycol as described in U.S. Patent 4,349,469.

Other useful polyesters are poly(1,4-cyclohexylenedimethylene terephthalate) and copolymers thereof with aliphatic diols of 2 to 12 carbon atoms or aliphatic or aromatic diacids as described above.

The vinyl alcohol polymers useful as the barrier layer in the laminates include those wherein the olefin content of the copolymer is between about 7 and about 50% mol percent and the residual ester content of the vinyl alcohol portion is below 3.0%. It is preferred that the differential thermal analysis curve for the copolymer be a single narrow endotherm having a melting range of less than 30°C. Also, the olefin content of the copolymer should be maintained within a narrow distribution range and significant amounts of homopolymer segments of either olefin or vinyl alcohol should be avoided.

The olefin distribution range and the presence of homopolymers is most conveniently measured using differential thermal analysis (DTA) techniques. The differential thermal analysis (DTA) is carried out according to the procedure set forth by D. A. Vassalo and J. C. Harden in Analytical Chemistry, Volume 34, January, 1962, pages 132—135, using a Du Pont 900 Differential Thermal Analyzer programmed at a

30°C/minute rate. A DTA curve wherein the curve is characterized by a single narrow melting endotherm having a range of less than 30°C indicates a narrow olefin distribution in the copolymer.

Suitable vinyl esters which can be copolymerized with the olefin comonomers and subsequently hydrolyzed to form the olefin-vinyl alcohol copolymers include vinyl ester monomers of the general formula

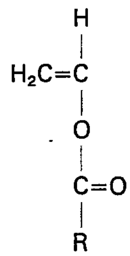

wherein R is selected from the group comprising hydrogen, alkyl groups of from 1 to 10 carbon atoms, aryl groups of from 6 to 10 carbon atoms including the carbon atoms in ring substituted alkyl substituents, e.g., vinyl formate, vinyl acetate, vinyl propionate, vinyl butyrate, vinyl benzoate, and the like. Preferably, the vinyl ester is vinyl acetate.

The preferred olefin-vinyl alcohol materials are ethylene-vinyl alcohol copolymers and wherein the olefin content is from 7 to 50 mol percent based on the weight of the copolymer. The residual ester content of the copolymer should be less than 3% and preferably less than 2% by weight. Most preferably the residual ester content is less than 1% by weight. The preferred ethylene-vinyl alcohol copolymer resins will contain less than 2% homopolymers. Especially preferred are homopolymers with less than 1% homopolymer. An example of a preferred copolymer is EVAL F (trademark) resin marketed by Kuraray Company.

Useful olefin-vinyl alcohol polymers and their preparation are known in the art. See, for example, U.S. Patent 3,585,177.

Although the described laminates can be used to advantage for any coextrusion application, the optimum advantage of the poly(esteramides) is for use in coextrusions which will be followed by some orientation process being performed at a temperature and conditions chosen to result in orienting the polyester portion of the coextruded structure.

The oriented laminates may conveniently be prepared by the methods disclosed in U.S. Patents 3,479,425 and 3,557,265. U.S. Patent 3,479,425 discloses a method of extruding laminar film wherein a composite stream consisting of coaxial streams of plastic is provided, passed to a sheeting die wherein the coaxial stream is deformed to provide a layered sheet. U.S. Patent 3,557,265 discloses a method whereby plastic film or sheet having a plurality of layers is formed by deforming a flowing stream having layers of diverse thermoplastic material wherein the cross-sectional configuration of the plurality of flowing streams is altered by reducing the dimension of the stream in a direction generally perpendicular to the interfaces between the individual streams and by increasing the dimension of the stream in a direction generally parallel to the interface to provide a sheet or film having a laminar structure.

The extruded pipe is made in a conventional manner by coextruding through a series of plate dies to sequentially overcoat the appropriate materials in such a manner that the resulting annular structure is arranged in five layers. Different relative extruder screw speeds and take-off rates permit a variety of different tubing products to be later made into preform and later to oriented bottles.

To produce a five-layer pipe having a wall thickness 0.59 mm the layers may be arranged as follows:

| | Thickness (mm) | Percent of total |
|---|---|---|
| Outer Layer | 0.28 | 48.00 |
| Bonding Composition | 0.0078 | 1.33 |
| Barrier Layer | 0.0078 | 1.33 |
| Tie Layer | 0.0078 | 1.33 |
| Inner Layer | 0.28 | 48.00 |
| Total Thickness | 0.59 | 100.00 |

The pipe is cut off to predetermined lengths and the lengths are formed into preforms or parisons to be blown into bottles. The pipe may be formed into parisons using the method disclosed in U.K. Patent

Specification 1,513,067 and known as the Corpoplast® system. The parisons or preforms may also be made by the method disclosed in GB—A—2052367.

A preferred method of blowing bottles using the laminates of this invention involves the use of a RHB—VIII three-lane, two-stage reheat blowing machine designed to produce one-half liter bottles. This machine is manufactured by Cincinnati Milacron, Plastics Machinery Division of Batavia, Ohio. The machine comprises a parison or preform carrier loading unit, a preform carrier and conveyor system, a three-lane heating system, double-acting toggle clamp unit, bottle ejection system and a programmable control system.

The following is a generalized example of the preparation of about 0.8 mol of a poly(esteramide) where only one diacid is present.

Into a 500 ml flask is weighed 0.16 mol (for a 20 mol % diamine modification) of the 1,2-ethanediamine, from 0.16 mol (for a 20 mol % diamine modification) to 0.80 mol of the diacid as desired, and from one-half to all of the glycol being used. The glycol excess, is generally from 10 to 100 mol % depending on the glycol volatility, the higher boiling the glycol, the lower the excess needed. The reaction mixture is stirred under an inert gas blanket and heated for sufficient time at about 200°C to cause amidization and some esterification to occur. Any glycol and diacid not added at the start of the reaction is then added and heating is continued (usually at a higher temperature, e.g. 220°C) to allow completion of the esterification reaction. The melt is then raised to the polycondensation temperature (e.g. 275°C) and a vacuum applied (usually to a pressure of 667 Pa [<5 torr]) for sufficient time to obtain the desired molecular weight (as measured by inherent viscosity). Organo-titanates or other active metal catalysts are usually used in the above reaction to yield acceptable reaction rates. The catalyst may be added either at the reaction start or later, such as when the temperature is brought up to the second heating level. It must be added at least prior to polycondensation.

For poly(esteramides) having a different diacid in the amide segment from that of the ester segment, the above procedure is used except the diacid intended for the amide segment is added to a mixture of the diamine in some or all of the glycol as stated above. After the initial heating, the diacid intended for the ester segment is added along with any glycol not added at the start.

Test for thin film deformation
Temperature transition

The test is conducted by first pressing a film of relatively uniform thickness of the dried poly(ester amide) bonding layer composition. The pressing is done in a press between 2.48 square cm ferrotype plates which have been coated with a backed-on silicon mold release agent. The present temperature was generally about 165°C (this depends, of course, on the melting point of the particular polymer composition and needs to be high enough to ensure good flow-out and a thin enough film during the pressing operation). Generally, pressing of the film at this temperature is done for about 20 s of applied pressure or more. After the pressing operation, the metal plates are removed and cooled between large aluminum blocks. The thickness of the pressed film may range from .02 mm to .08 mm with .02 mm to .04 mm being the most desirable thickness range. A sample of the film about 2.5 cm long and nominally .03 cm in width is cut being careful to maintain even width along the length of the sample. The film is mounted in the film specimen grips of a thermomechanical analyzer and mounted in the instrument. The film is loaded to $3.43\times10^5$ N/m$^2$ (3.5 kg/cm$^2$) tensile stress by the use of small weights and the test chamber flushed with a flow of helium gas. Heating is conducted at a rate of 20°C per minute (after thermal equilibration at a temperature above room temperature). The deflection of the film vs. temperature is recorded on the strip chart recorder. The trace is then analyzed to obtain the deformation temperature transition by drawing the initial baseline forward and the deflection line, which after an initially curved partition tends to be straight, backward to obtain an intersection of the two lines. The temperature at the intersection of the two lines is the thin film deformation temperature transition. In order for the bonding compositions to perform satisfactorily, it has been found that this temperature needs to be in the range of no more than 50°C below the glass transition temperature of the polyester polymer which represents the major portion of the structure of the laminate. The deformation temperature transition may also not exceed the glass transition temperature of the polyester layer of the laminate by more than about 25°C (preferred is 20°C). The lower limit of the deformation temperature transition of the bonding composition is subject to the limitation that it may not be lower than about 70°C. Thus, the polyesters such as poly(ethylene terephthalate), this has the practical effect of limiting the lower limit of the deformation temperature transition to about 10°C below the glass transition temperature of the polyester component.

For the purposes of uniformity of measurement of the glass transition temperature, it is determined at a heating rate of 20°C per minute in a DSC instrument. The actual glass transition temperature is defined as the midpoint of the glass to rubber transition.

In addition to the above temperature test it is also necessary in defining suitable bonding compositions to determine the T-peel strength of a laminate of the polyester component, the bonding composition, and the barrier composition. The peel strength of the laminate must be at least 19.6 N/m (2 kg/m). The laminate for testing is prepared by first extruding films of the polyester and barrier materials (such as ethylene vinyl alcohol copolymer having a 65 mol % vinyl alcohol content) to a thickness of approximately .02 mm. The bonding composition is likewise extruded into film form. A three-layer laminate is assembled from strips of

each of the films of about 2.5 cm width and 10 cm or more in length. The laminate, with the bonding composition in the center, is heat-sealed using a heat sealer with an approximate 177—190°C jaw temperature and a 4 to 5 second sealing time at a jaw pressure of $1.37 \times 10^5$ N/m$^2$ (1.4 kg/cm$^2$). The T-peel test is run according to ASTM D1876.

Poly 1,4-tetramethylene azelate modified with 1,6-hexanediamine

| Mol % diamine | Deformation temperature transition, °C | T-peel N/m (kg/m) |
|---|---|---|
| 5 | 58 | 382 (39) |
| 7.5 | 67.5 | * |
| 10 | 75 | 647 (66) |
| 20 | 87 | 470 (48) |
| 30 | 94.5 | 19.6 ( 2) |
| 32.5 | 107 | * |
| 35 | 109 | 0 |

*Not determined

This invention can be further illustrated by the following examples.

Examples

All inherent viscosities are determined at 25°C in 60/40 (wt/wt) phenol/tetrachloroethane (PTCE) at a concentration of 0.5 g/100 ml, and are given in units of dl/g.

Group I—Polyester amides)

Preparation I-1

A poly(esteramide) is prepared by combining the following in a 500 ml three neck round bottom flask: 18.8 g (0.10 mol) azelaic acid, 3.0 g (0.05 mol) 1,2-ethanediamine, and 49.5 g (0.55 mol) 1,4-butanediol. The mixture was stirred under nitrogen and the flask immersed in a 200°C metal bath at 200°C for one hour. After that time, 75.3 g (0.40 mol) of azelaic acid was added and 45.0 g (0.45 mol) of 1,4-butanediol along with sufficient acetyl triisopropyltitanate to give 100 ppm in the final polymer. The mixture was stirred for an additional hour at 220°C and the bath temperature raised to 275°C. The reaction mixture was put under vacuum at 40 Pa (0.3 mm Hg) for 45 minutes, after which the flask was removed from the bath and the polymer cooled under nitrogen. The I.V. of the poly(esteramide) was 0.594.

Preparation I-2

A poly(esteramide) was prepared as above but using 6.0 g (0.10 mol) of 1,2-ethanediamine and 72.0 g (0.80 mol) of 1,4-butanediol as the total reactants (the azelaic acid and Ti catalyst amounts remain unchanged). All reactants were allowed to react together at a 200°C metal bath temperature for one hour, after which the bath temperature was raised to 245°C and the melt polycondensed for 75 minutes at 53.3 Pa (0.4 torr). The resultant polymer had an I.V. of 0.569.

Examples 1 & 2

Pipe coextrusion was performed using poly(ethylene terephthalate) modified with 3.5 mol % 1,4-cyclohexanedimethanol as the polyester layer, an ethylenevinyl alcohol copolymer containing 35 mol % ethylene units as the barrier layer, and the materials of Preparations I-1 and I-2 as bonding composition layers. The coextruded pipe had good appearance and adhesion. Bottles blown from the parisons formed from the pipe showed acceptable adhesion.

Example 3—Comparative

Pipe coextrusion was performed as in Examples 1 and 2 but using a poly(esteramide) prepared as in Preparation I-1 from poly(1,4-tetramethylene 1,12-dodecanedioate) and 10 mol % of 1,2-ethanediamine (I.V.=0.50). Bottles blown from parisons formed from the coextruded pipe showed unacceptable adhesion in the bottle side walls.

Group II—Poly(ester amides)

Preparation II-1

A poly(esteramide) bonding composition comprising repeating units of the following reactants was prepared as follows: 150.4 g azelaic acid (0.80 mol), 115.2 g (1.28 mol, 100% excess) 1,4-butanediol, and 22.72 g (0.16 mol) 1,4-cyclohexanebismethylamine and enough Ti as acetyl triisopropyl titanate to give 150 ppm Ti in the final polymer. All of the diamine, 80% of the diacid and 50% of the diol were combined in a 500 ml, three-neck round bottom flask and the flask immersed in a 200°C metal bath. The reaction was stirred one hour after which the remainder of the reactants was added and allowed to react an additional hour. Polycondensation at 275°C under vacuum at ~40 Pa (~0.3 torr) for two hours yielded a polymer of I.V. of 1.04 which was rubbery.

Example 4

Five-layer pipe coextrusion was performed using poly(ethylene terephthalate) modified with 3.5 mol percent 1,4-cyclohexanedimethanol as the polyester layers (outer and inner), a poly(esteramide) having an I.V. of 1.3 prepared as described in Preparation II-1 was used as the bonding composition layers and a copolymer of ethylene-vinyl alcohol containing 65 mol % vinyl alcohol was used as the barrier layer to form the five-layer pipe. The layers of the pipe exhibited excellent appearance and the pipe was formed into a preform. The preform was then blown into a bottle. The bottle exhibited no delamination, even when pressurized with carbonated water.

Example 5

Pipe coextrusion was performed using poly(ethylene terephthalate) modified with 3.5 mol percent 1,4-cyclohexanedimethanol as the polyester, a poly(amide ester) consisting of poly(1,4-tetramethylene azelate) modified with 20 mol % 1,6-hexanediamine (prepared as in Preparation II-1 to give partial blocking using 20% of the azelaic acid to perform the amide segment) (I.V.=1.30), and a barrier layer of a copolymer of ethylene vinyl alcohol having 65 mol percent vinyl alcohol to form a five-layer pipe. The pipe had excellent appearance and adhesion. It was formed by a series of steps into first a parison and then into a bottle. The bottle side wall was sectioned and an attempt made to separate the barrier layer from either polyester layer. The bond appeared to be virtually inseparable.

Examples 6—7

Pipe coextrusion was performed as in Examples 4 and 5, but substituting instead the following poly(esteramides) which had been prepared having all the reactants added to the reactor at the very beginning. The two compositions thus produced were:

(1) poly(1,4-tetramethylene azelate) modified with 20 mol % 1,4-cyclohexanebismethylamine, (I.V.=1.33), and
(2) poly(1,4-tetramethylene azelate) modified with 20 mol % 1,6-hexanediamine (I.V.=1.37).

Pipes using both adhesives had excellent appearance and adhesion. Bottles made from the pipes also showed excellent bonding of the barrier layer to the polyester layers.

Examples 8—9

Pipe coextrusion was performed as in Examples 4 and 5, but substituting instead the following poly(esteramides) which were prepared as in Example 1 (using 20% of the diacid to preform the amide segment):

(1) poly(1,4-tetramethylene azelate) modified with 10 mol % 1,4-cyclohexanebismethylamine (I.V.=1.37), and
(2) poly(1,4-tetramethylene azelate) modified with 30 mol % 1,4-cyclohexanebismethylamine (I.V.=1.33).

The pipe from both five-layer coextrusions had excellent appearance and adhesion. Bottles made from the pipe showed acceptable adhesion.

Example 10—Comparative

Pipe coextrusion was performed as in Examples 2 and 3 but substituting instead the following poly(esteramide) (prepared as in Preparation II-1 using 20% of the diacid to preform the amide segment): poly(1,4-tetramethylene adipate) modified with 1,6-hexanediamine (I.V.=1.068).

The coextruded pipe had excellent appearance and adhesion. The bottles showed unacceptable adhesion of the barrier layer to the polyester.

Example 11—Comparative

Pipe coextrusion was performed as in Examples 4 and 5 but substituting instead a poly(esteramide) (prepared as in Preparation II-1 using 20% of the diacid to preform the amide segment) of the following

composition: poly(1,4-cyclohexylenedimethylene 1,12-dodecanedioate) modified with 20 mol % of 1,4-cyclohexanebismethylamine (I.V.=1.02).

The pipe had excellent appearance and adhesion. The bottles blown from the pipe had unacceptable adhesion of the barrier layer to the polyester.

Example 12—Comparative

Pipe coextrusion was performed with the poly(esteramide) of Preparation II-1 but using only 0.710 I.V. material. The bottles produced showed unacceptable adhesion of the barrier layer to the polyester.

Examples 13—14

Pipe coextrusion was performed as in Example 4 but substituting the following poly(esteramides) (prepared as in Preparation II-1 using 20% of the diacid to preform the amide segment):

(1) poly(1,4-tetramethylene 1,7-heptanedioate) modified with 20 mol % of 1,4-cyclohexanebismethylamine (I.V.=0.81), and
(2) poly(1,4-tetramethylene 1,10-decanedicoate) modified with 20 mol % of 1,4-cyclohexanebismethylamine (I.V.=0.95).

The pipe showed excellent appearance and adhesion. Bottles blown from the pipes showed excellent adhesion.

Example 15—Comparative

Pipe coextrusion was performed as in Example 4 but substituting the poly(esteramide) poly(1,4-tetramethylene 1,8-octanedioate) modified with 20 mol percent of 1,4-cyclohexanebismethylamine (I.V. 1.202). The pipe had excellent appearance and adhesion.

Bottles blown from the pipe showed unacceptable adhesion.

Example 16—Comparative

Pipe coextrusion was performed as in Example 4 but substituting a poly(esteramide) (prepared as in Preparation II-1 using 20% of the diacid to preform the amide segment) of poly(1,6-hexamethylene adipate) modified with 20 mol % 1,6-hexanediamine (I.V.=0.77). Pipe coextrusion was unsuccessful in this case.

Example 17

Film coextrusion was performed giving a five layer construction similar to the pipe examples above using the poly(esteramide) of Preparation II-1 [poly(1,4-tetramethylene azelate) modified with 20 mol % of 1,4-cyclohexanebismethylamine] and substituting for the poly(ethylene terephthalate) a poly(1,4-cyclohexylenedimethylene 1,4-cyclohexanedicarboxylate) modified with 25 wt % of 1000 mol wt poly(oxytetramethylene) glycol and 0.5 mol % of trimellitic anhydride. The clear, flexible structure has very high interlayer adhesion.

Example 18—Comparative

A poly(esteramide) was prepared as in Preparation II-1 to make poly(1,4-tetramethylene adipate) modified with 20 mol % 3,3'-ethylenedioxybis(propylamine (I.V.=0.884 dl/g).

Attempted pipe coextrusion failed to give a uniform bonding composition layer distribution.

Example 19—Comparative

A poly(esteramide) was prepared as in Preparation II-1 using terephthalic acid and 3,3'-ethylenedioxybis(propylamine) as the amide segment (20 mol %) and azelaic acid and 1,4-butanediol as the ester segment. An I.V. of 1.154 was obtained.

Attempted pipe coextrusion failed due to inability to achieve a uniform bonding composition layer distribution (the polymer tended to stick badly in the extruder throat).

Examples 20—21—Comparative

Poly(esteramides) were prepared as in Preparation II-1:

(1) poly(1,4-tetramethylene azelate) modified with 5 mol % 1,4-cyclohexanebismethylamine (I.V.=1.38), and
(2) poly(1,4-tetramethylene azelate) modified with 35 mol % 1,4-cyclohexanebismethylamine (I.V.=1.10).

Pipe coextrusion of the above gave acceptable adhesion for both. Bottles blown from the coextruded structures, however, had unacceptable adhesion in the bottle side wall.

Group III—Poly(ester amides)

Preparation III-1

A poly(esteramide) bonding composition was prepared as follows: 37.6 g (0.20 mol) azelaic acid, 18.6 g

(0.16 mol) 1,6-hexanediamine and 57.6 g (0.64 mol) 1,4-butanediol was combined in a three-neck 500 mL round bottom flask. The flask was immersed in a metal bath held at 200°C and the mixture stirred for one hour at 200°C. After that time 87.6 g (0.60 mol) adipic acid and an additional 57.6 g (0.64 mol) of 1,4-butanediol were added along with sufficient acetyl triisopropyl titanate to give 100 ppm in the final polymer. Heating was continued for one hour at 220°C. The melt was then polycondensed at a bath temperature of 275°C for one hour. The resultant polymer had an I.V. of 1.123.

Example 22

Five-layer pipe extrusion was performed using poly(ethylene terephthalate) modified with 3.5 mol percent 1,4-cyclohexanedimethanol as the polyester layers (outer and inner), the poly(esteramide) of Preparation III-1 as the bonding composition layers and a copolymer of ethylene-vinyl alcohol containing 65 mol % vinyl alcohol was used as the barrier layer to form the five-layer pipe. The layers of the pipe exhibited excellent appearance and the pipe was formed into a preform. the preform was then blown into a bottle. The bottle exhibited no delamination, even when pressurized with carbonated water.

Example 23

Pipe coextrusion was performed as in Example 22 but substituting the following poly(esteramide): poly(1,4-tetramethylene 1,8-octanedioate) modified with 20 mol % azelaic acid and 20 mol % 1,6-hexanediamine (the amide segment is made from the diamine and azelaic acid) (I.V.=1.13). Pipe from the coextrusion had excellent appearance and adhesion. Bottles blown from parisons formed from the pipe showed excellent adhesion in the bottle side wall.

Example 24

Pipe extrusion was performed as in Example 22 but substituting the following polyesteramide: poly(1,4-tetramethylene adipate) modified with 20 mol % 1,12-dodecanedioic acid and 20 mol % 1,6-hexanediamine (I.V.=0.90), (the amide segment is made from diamine and 1,12-dodecanedioic acid).

Pipe coextrusion showed good adhesion and appearance. Bottles blown from parisons formed from the pipe showed excellent adhesion in side walls.

Example 25—Comparative

A polyesteramide is prepared as in Preparation III-1 with the following composition: poly(1,4-tetramethylene 1,12-dodecanedioate) modified with 20 mol % adipic acid and 20 mol % 1,6-hexanediamine (I.V.=1.23). The adipic acid and 1,6-hexanediamine form the amide segment of the poly(esteramide).

Pipe coextrusion gave a pipe of good appearance but marginal adhesion. Bottles blown from parisons made from the pipe showed unacceptable adhesion of the polyester and barrier polymer layers.

**Claims for the Contracting States: DE, FR, GB, NL**

1. A laminate comprising a polyester or a copolyester bound to poly(vinyl alcohol) or a copolymer thereof with a bonding composition

characterized in that said bonding composition comprises a poly(esteramide) having

a) a thin film deformation temperature transition which is

1) greater than 70°C
2) not greater than 50°C lower nor 25°C higher than the glass transition temperature of the polyester or copolyester and

b) A T-peel strength in the laminate of at least 19.6 N/m (2 kg/m);

wherein said poly(esteramide)

(A) has an inherent viscosity of at least 0.45 dl/g and contains

1) repeating units derived from an acid component which is at least 80 mol percent of a dicarboxylic acid selected from pimelic, azelaic or sebacic acid or combinations thereof and optionally up to 20 mol percent of an additional linear aliphatic dicarboxylic acid having at least four carbon atoms connected linearly between the two acid groups or an aromatic dicarboxylic acid and
2) repeating units derived from a diamine and glycol component which is from 5 mol percent to 20 mol percent of 1,2-ethanediamine and from 95 to 80 mol percent of a glycol selected from ethylene glycol, 1,4-butanediol, 1,4-cyclohexanedimethanol or combinations thereof; or

(B) has an inherent viscosity of at least 0.8 dl/g and contains

1) repeating units derived from an acid component which is at least 70 mol percent of a dicarboxylic acid selected from pimelic, azelaic or sebacic acid or combinations thereof and optionally up to 30 mol percent of an additional linear aliphatic dicarboxylic acid having at least four carbon atoms connected linearly between the two acid groups or an aromatic dicarboxylic acid and

2) repeating units derived from a diamine and glycol component which is from 10 mol percent to 30 mol percent of a diamine selected from 1,6-hexanediamine, 1,4-cyclohexanebismethylamine or combinations thereof and from 90 to 70 mol percent of glycol selected from ethylene glycol, 1,4-butanediol, 1,4-cyclohexanedimethanol or combinations thereof; or

(C) has an inherent viscosity of at least 0.8 dl/g and contains

1) repeating units derived from an acid component which is 70 to 90 mol percent of a dicarboxylic acid selected from adipic, pimelic, suberic, azelaic or sebacic acid and 10 to 30 mol percent of a second linear aliphatic dicarboxylic acid having at least four carbon atoms connected linearly between the two acid groups or an aromatic dicarboxylic acid and
2) repeating units derived from a diamine and glycol component which is from 10 mol percent to 30 mol percent of a diamine selected from 1,6-hexanediamine, 1,4-cyclohexanebismethylamine or combinations thereof and from 90 to 70 mol percent of a glycol selected from ethylene glycol, 1,4-butanediol, 1,4-cyclohexanedimethanol or combinations thereof.

2. A laminate according to claim 1 wherein said polyester is poly(ethylene terephthalate).
3. A laminate according to claim 1 or 2 wherein said copolymer of vinyl alcohol is an ethylene-vinyl alcohol copolymer having an ethylene content of 30 to 50 mole percent.
4. A bonding composition suitable for use in the preparation of a laminate according to claim 1 which comprises a poly(esteramide) as defined in part (A), (B) or (C) of claim 1.
5. A container made from a laminate according to any one of claims 1—3 wherein said polyester has been oriented.

**Claims for the Contracting States: BE, CH, LI**

1. A laminate comprising a polyester or a copolyester bound to poly(vinyl alcohol) or a copolymer thereof with a bonding composition
characterised in that said bonding composition comprises a poly(esteramide) having
a) a thin film deformation temperature transition which is

1) greater than 70°C
2) not greater than 50°C lower nor 25°C higher than the glass transition temperature of the polyester or copolyester to be bonded and

b) a T-peel strength in the laminate of at least 19.6 N/m (2 kg/m).
2. A laminate according to claim 1 wherein said poly(esteramide) has an inherent viscosity of at least 0.45 dl/g and contains

1) repeating units derived from an acid component which is at least 80 mol percent of a dicarboxylic acid selected from pimelic, azelaic or sebacic acid or combinations thereof and optionally up to 20 mol percent of an additional linear aliphatic dicarboxylic acid having at least four carbon atoms connected linearly between the two acid groups or an aromatic dicarboxylic acid and
2) repeating units derived from a diamine and glycol component which is from 5 mol percent to 20 mol percent of 1,2-ethanediamine and from 95 to 80 mol percent of a glycol selected from ethylene glycol, 1,4-butanediol, 1,4-cyclohexanedimethanol or combinations thereof.

3. A laminate according to claim 1 wherein said poly(esteramide) has an inherent viscosity of at least 0.8 dl/g and contains

1) repeating units derived from an acid component which is at least 70 mol percent of a dicarboxylic acid selected from pimelic, azelaic or sebacic acid or combinations thereof and optionally up to 30 mol percent of an additional linear aliphatic dicarboxylic acid having at least four carbon atoms connected linearly between the two acid groups or an aromatic dicarboxylic acid and
2) repeating units derived from a diamine and glycol component which is from 10 mol percent to 30 mol percent of a diamine selected from 1,6-hexanediamine, 1,4-cyclohexanebismethylene or combinations thereof and from 90 to 70 mol percent of a glycol selected from ethylene glycol, 1,4-butanediol, 1,4-cyclohexanedimethanol or combinations thereof.

4. A laminate according to claim 1 wherein said poly(esteramide) has an inherent viscosity of at least 0.8 dl/g and contains

1) repeating units derived from an acid component which is 70 to 90 mol percent of a dicarboxylic acid selected from adipic, pimelic, suberic, azelaic or sebacic acid and 10 to 30 mol percent of a second linear

aliphatic dicarboxylic acid having at least four carbon atoms connected linearly between the two acid groups or an aromatic dicarboxylic acid and

2) repeating units derived from a diamine and glycol component which is from 10 mol percent to 30 mol percent of a diamine selected from 1,6-hexanediamine, 1,4-cyclohexanebismethylamine or combinations thereof and from 90 to 70 mol percent of a glycol selected from ethylene glycol, 1,4-butanediol, 1,4-cyclohexanedimethanol or combinations thereof.

5. A laminate according to any one of the preceding claims wherein said polyester is poly(ethylene terephthalate).

6. A laminate according to any one of the preceding claims wherein said copolymer of vinyl alcohol is an ethylene-vinyl alcohol copolymer having an ethylene content of 30 to 50 mole percent.

7. A bonding composition suitable for use in the preparation of a laminate according to claim 1 which comprises a poly(ester amide) as defined in any one of claims 2 to 4.

8. A container made from a laminate according to any one of claims 1—6 wherein said polyester has been oriented.

**Patentansprüche für die Vertragsstaaten: DE, FR, GB, NL**

1. Schichtstoff aus einem Polyester oder Copolyester, der mit einer Bindemittelzusammensetzung an Poly(vinylalkohol) oder ein Copolymer hiervon gebunden ist, dadurch gekennzeichnet, daß die Bindemittelzusammensetzung aus einem Poly(esteramid) aufgebaut ist, das aufweist:

a) einen Deformationstemperatur-Übergang eines dünnen Films, der

1) bei über 70°C

2) nicht mehr als 50°C unter, noch 25°C über der Glasübergangstemperatur des Polyesters oder Copolyesters liegt und

b) eine T-Abziehfestigkeit im Schichtstoff von mindestens 19,6 N/m (2 kg/m) aufweist, wobei das Poly(esteramid)

(A) eine Inherent-Viskosität von mindestens 0,45 dl/g aufweist und enthält:

1) wiederkehrende Einheiten, die sich von einer Säurekomponente ableiten, die mindestens zu 80 Mol-% aus einer Dicarbonsäure, ausgewählt aus Pimelin-, Azelain- oder Sebazinsäure oder Kombinationen hiervon und gegebenenfalls bis zu 20 Mol-% aus einer zusätzlichen linearen aliphatischen Dicarbonsäure mit mindestens vier linear miteinander verbundenen Kohlenstoffatom zwischen den zwei Säuregruppen oder einer aromatischen Dicarbonsäure besteht und

2) wiederkehrende Einheiten, die sich von einer Diamin- und Glykolkomponente ableiten, die zu 5 bis 20 Mol-% aus 1,2-Ethandiamin und zu 95 bis 80 Mol-% aus einem Glykol, ausgewählt aus Ethylenglykol, 1,4-Butandiol, 1,4-Cyclohexandimethanol oder Kombinationen hiervon besteht; oder

(B) eine Inherent-Viskosität von mindestens 0,8 dl/g aufweist und enthält:

1) wiederkehrende Einheiten, die sich von einer Säurekomponente ableiten, die mindestens zu 70 Mol-% aus einer Dicarbonsäure, ausgewählt aus Pimelin-, Azelain- oder Sebazinsäure oder Kombinationen hiervon und gegebenenfalls bis zu 30 Mol-% aus einer zusätzlichen linearen aliphatischen Dicarbonsäure mit mindestens vier linear miteinander verbundenen Kohlenstoffatomen zwischen den zwei Säuregruppen oder einer aromatischen Dicarbonsäure besteht und

2) wiederkehrende Einheiten, die sich von einer Diamin- und Glykolkomponente ableiten, die zu 10 bis 30 Mol-% aus einem Diamin- ausgewählt aus 1,6-Hexandiamin, 1,4-Cyclohexanbismethylamin oder Kombinationen hiervon und zu 90 bis 70 Mol-% aus einem Glykol, ausgewählt aus Ethylenglykol, 1,4-Butandiol, 1,4-Cyclohexandimethanol oder Kombinationen hiervon besteht; oder

(C) eine Inherent-Viskosität von mindestens 0,8 dl/g aufweist und enthält:

1) wiederkehrende Einheiten, die sich von einer Säurekomponente ableiten, die zu 70 bis 90 Mol-% aus einer Dicarbonsäure, ausgewählt aus Adipin-, Pimelin-, Suberin-, Azelain- oder Sebazinsäure und zu 10 bis 30 Mol-% aus einer zweiten linearen aliphatischen Dicarbonsäure mit mindestens vier linear miteinander verbundenen Kohlenstoffatomen zwischen den zwei Säuregruppen oder einer aromatischen Dicarbonsäure besteht und

2) wiederkehrende Einheiten, die sich von einer Diamin- und Glykolkomponente ableiten, die zu 10 bis 30 Mol-% aus einem Diamin, ausgewählt aus 1,6-Hexandiamin, 1,4-Cyclohexanbismethylamin oder Kombinationen hiervon und zu 90 bis 70 Mol-% aus einem Glykol, ausgewählt aus Ethylenglykol, 1,4-Butandiol, 1,4-Cyclohexandimethanol oder Kombinationen hiervon besteht.

2. Schichtstoff nach Anspruch 1, in dem der Polyester aus Poly(ethylenterephthalat) besteht.

3. Schichtstoff nach Anspruch 1 oder 2, in dem das Copolymer des Vinylalkohols ein Ethylen-Vinylalkoholcopolymer mit einem EThylengehalt von 30 bis 50 Mol-% ist.

4. Bindemittelzusammensetzung, die zur Herstellung eines Schichtstoffes nach Anspruch 1 geeignet ist, und ein Poly(esteramid) gemäß Teil (A), (B) oder (C) von Anspruch 1 aufweist.

5. Behälter, hergestellt aus einem Schichtstoff nach einem der Ansprüche 1—3, in dem der Polyester orientiert wurde.

**Patentansprüche für die Vertragsstaaten: BE, CH, LI**

1. Schichtstoff aus einem Polyester oder Copolyester, der mit einer Bindemittelzusammensetzung an Poly(vinylalkohol) oder ein Copolymer hiervon gebunden ist, dadurch gekennzeichnet, daß die Bindemittelzusammensetzung aus einem Poly(esteramid) aufgebaut ist, das aufweist:

a) einen Deformationstemperatur-Übergang eines dünnen Films, der

1) bei über 70°C
2) nicht mehr als 50°C unter, noch 25°C über der Glasübergangstemperatur des zu verbindenden Polyesters oder Copolyesters liegt und

b) eine T-Abziehfestigkeit im Schichtstoff von mindestens 19,6 N/m (2 kg/m) aufweist.

2. Schichtstoff nach Anspruch 1, in dem das Poly(esteramid) eine Inherent-Viskosität von mindestens 0,45 dl/g aufweist und enthält:

1) wiederkehrende Einheiten, die sich von einer Säurekomponente ableiten, die mindestens zu 80 Mol-% aus einer Dicarbonsäure, ausgewählt aus Pimelin-, Azelain- oder Sebazinsäure oder Kombinationen hiervon und gegebenenfalls bis zu 20 Mol-% aus einer zusätzlichen linearen aliphatischen Dicarbonsäure mit mindestens vier linear miteinander verbundenen Kohlenstoffatomen zwischen den zwei Säuregruppen oder einer aromatischen Dicarbonsäure besteht und
2) wiederkehrende Einheiten, die sich von einer Diamin- und Glykolkomponente ableiten, die zu 5 bis 20 Mol-% aus 1,2-Ethandiamin und zu 95 bis 80 Mol-% aus einem Glykol, ausgewält aus Ethylenglykol, 1,4-Butanediol, 1,4-Cyclohexandimethanol oder Kombinationen hiervon besteht

3. Schichtstoff nach Anspruch 1, in dem das Poly(esteramid) eine Inherent-Viskosität von mindestens 0,8 dl/g aufweist und enthält:

1) wiederkehrende Einheiten, die sich von einer Säurekomponente ableiten, die mindestens zu 70 Mol-% aus einer Dicarbonsäure, ausgewält aus Pimelin-, Azelain- oder Sebazinsäure oder Kombinationen hiervon und gegebenenfalls bis zu 30 Mol-% aus einer zusätzlichen linearen aliphatischen Dicarbonsäure mit mindestens vier linearen miteinander verbundenen Kohlenstoffatomen zwischen den zwei Säuregruppen oder einer aromatischen Dicarbonsäure besteht und
2) wiederkehrende Einheiten, die sich von einer Diamin- und Glykolkomponente ableiten, die zu 10 bis 30 Mol-% aus einem Diamin- ausgewählt aus 1,6-Hexandiamin, 1,4-Cyclohexanbismethylamin oder Kombinationen hiervon und zu 90 bis 70 Mol-% aus einem Glykol, ausgewählt aus Ethylenglykol, 1,4-Butandiol, 1,4-Cyclohexandimethanol oder Kombinationen hiervon besteht.

4. Schichtstoff nach Anspruch 1, in dem das Poly(esteramid) eine Inherent-Viskosität von mindestens 0,8 dl/g aufweist und enthält:

1) wiederkehrende Einheiten, die sich von einer Säurekomponente ableiten, die zu 70 bis 90 Mol-% aus einer Dicarbonsäure, ausgewählt aus Adipin-, Pimelin-, Suberin-, Azelain- oder Sebazinsäure und zu 10 bis 30 Mol-% aus einer zweiten linearen aliphatischen Dicarbonsäure mit mindestens vier linear miteinander verbundenen Kohlenstoffatomen zwischen den zwei Säuregruppen oder einer aromatischen Dicarbonsäure besteht und
2) wiederkehrende Einheiten, die sich von einer Diamin- und Glykolkomponente ableiten, die zu 10 bis 30 Mol-% aus einem Diamin, ausgewählt aus 1,6-Hexandiamin, 1,4-Cyclohexanbismethylamin oder Kombinationen hiervon und zu 90 bis 70 Mol-% aus einem Glykol, ausgewählt aus Ethylenglykol, 1,4-Butandiol, 1,4-Cyclohexandimethanol oder Kombinationen hiervon besteht.

5. Schichtstoff nach einem der vorstehenden Ansprüche, in dem der Polyester aus Poly(ethylenterephthalat) besteht.

6. Schichtstoff nach einem der vorstehenden Ansprüche, in dem des Copolymer des Vinylalkohols ein Ethylen-Vinylalkoholcopolymer mit einem Ethylengehalt von 30 bis 50 Mol-% ist.

7. Bindemittelzusammensetzung, die zur Herstellung eines Schichtstoffes nach Anspruch 1 geeignet ist, und ein Poly(esteramid) nach einem der Ansprüche 2 bis 4 enthält.

8. Behälter, hergestellt aus einem Schichtstoff nach einem der Ansprüche 1—6, in dem der Polyester orientiert wurde.

**Revendications pour les Etats Contractants: DE, FR, GB, NL**

1. Laminé comprenant un polyester ou un copolyester lié à un alcool polyvinylique ou à un copolymère de ce dernier par une composition de liaison, caractérisé en ce que ladite composition de liaison comprend un polyesteramide ayant

a) un point de transition dans la courbe de déformation du film mince en fonction de la température et à charge constante

1) qui est supérieur à 70°C
2) qui n'est pas inférieur de plus de 50°C ou supérieur de plus de 25°C à la température de transition vitreuse du polyester ou du copolyester

b) une résistance à l'arrachement en T dans le laminé d'au moins 19,6 N/m (2 kg/m);
ledit polyesteramide ayant
A) soit une viscosité inhérente d'au moins 0,45 dl/g et contenant

1) des motifs dérivés d'un constituant acide qui contient au moins 80 moles pour cent d'un acide dicarboxylique choisi parmi les acides pimélique, azélaïque ou sébacique ou des combinaisons de ces derniers et éventuellement jusqu'à 20 moles pour cent d'un second acide dicarboxylique aliphatique linéaire ayant au moins quatre atomes de carbone en chaîne droite entre les deux groupes acides, ou d'un acide dicarboxylique aromatique et
2) des motifs dérivés d'un constituant diamine et glycol qui contient 5 à 20 moles pour cent de 1,2-éthanediamine et 95 à 80 moles pour cent d'un glycol choisi parmi l'éthylène glycol, le 1,4-butanediol, le 1,4-cyclohexanediméthanol ou des combinaisons de ces derniers;

B) soit une viscosité inhérente d'au moins 0,8 dl/g et contenant

1) des motifs dérivés d'un constituant acide qui contient au moins 70 moles pour cent d'un acide dicarboxylique choisi parmi les acides pimélique, azélaïque ou sébacique ou des combinaisons de ces derniers et éventuellement jusqu'à 30 moles pour cent d'un second acide dicarboxylique aliphatique linéaire ayant au moins 4 atomes de carbone en chaîne droite entre les deux groupes acide, ou d'un acide dicarboxylique aromatique et
2) des motifs dérivés d'un constituant diamine et glycol qui contient 10 à 30 moles pour cent d'une diamine choisie parmi la 1,6-hexanediamine, la 1,4-cyclohexanebisméthylamine ou des combinaisons de ces dernières et 90 à 70 moles pour cent d'un glycol choisi parmi l'éthylène glycol, le 1,4-butanediol, le 1,4-cyclohexanediméthanol ou des combinaisons de ces derniers

C) soit une viscosité inhérente d'au moins 0,8 dl/g et contenant

1) des motifs dérivés d'un constituant acide qui contient 70 à 90 moles pour cent d'un acide dicarboxylique choisi parmi les acides adipique, pimélique, subérique, azélaïque ou sébacique et 10 à 30 moles pour cent d'un second acide dicarboxylique linéaire aliphatique ayant au moins 4 atomes de carbone en chaîne droite entre les deux groupes acide, ou d'un acide dicarboxylique aromatique et
2) des motifs dérivés d'un constituant diamine et glycol qui contient 10 à 30 moles pour cent d'une diamine choisie parmi la 1,6-hexanediamine, la 1,4-cyclohexanebisméthylamine ou des combinaisons de ces dernières et 90 à 70 moles pour cent d'un glycol choisi parmi l'éthylène glycol, le 1,4-butanediol et le 1,4-cyclohexanediméthanol ou des combinaisons de ces derniers.

2. Laminé selon la revendication 1 dans lequel ledit polyester est du polytéréphtalate d'éthylène.

3. Laminé selon la revendication 1 ou 2 dans lequel ledit copolymère de l'alcool vinylique est un copolymère d'éthylène et d'alcool vinylique ayant une teneur en éthylène comprise entre 30 et 50 moles pour cent.

4. Composition de liaison utilisable dans la préparation d'un laminé selon la revendication 1 comprenant un polyesteramide tel que défini dans les parties (A), (B) ou (C) de la revendication 1.

5. Récipient fabriqué à partir du laminé selon l'une quelconque des revendications 1 à 3 dans lequel ledit polyester a été orienté.

**Revendications pour les Etats Contractants: BE, CH, LI**

1. Laminé comprenant un polyester ou un copolyester lié à un alcool polyvinylique ou à un copolymère de ce dernier par une composition de liaison, caractérisé en ce que ladite composition de liaison comprend un polyesteramide ayant

a) un point de transition dans la courbe de déformation du film mince en fonction de la température et à charge constante

1) qui est supérieur à 70°C

2) qui n'est pas inférieur de plus de 50°C ou supérieur de plus de 25°C à la température de transition vitreuse du polyester ou du copolyester

b) une résistance à l'arrachement en T dans le laminé d'au moins 19,6 N/m (2 kg/m).

2. Laminé selon la revendication 1 dans lequel ledit polyesteramide a une une viscosité inhérente d'au moins 0,45 dl/g et contient

1) des motifs dérivés d'un constituant acide qui contient au moins 80 moles pour cent d'un acide dicarboxylique choisi parmi les acides pimélique, azélaïque ou sébacique ou des combinaisons de ces derniers et éventuellement jusqu'à 20 moles pour cent d'un second acide dicarboxylique aliphatique linéaire ayant au moins quatre atomes de carbone en chaîne droite entre les deux groupes acides, ou d'un acide dicarboxylique aromatique et

2) des motifs dérivés d'un constituant diamine et glycol qui contient 5 à 20 moles pour cent de 1,2-éthanediamine et 95 à 80 moles pour cent d'un glycol choisi parmi l'éthylène glycol, le 1,4-butanediol, le 1,4-cyclohexanediméthanol ou des combinaisons de ces derniers.

3. Laminé selon la revendication 1 dans lequel ledit polyesteramide a une viscosité inhérente d'au moins 0,8 dl/g et contient

1) des motifs dérivés d'un constituant acide qui contient au moins 70 moles pour cent d'un acide dicarboxylique choisi parmi les acides pimélique, azélaïque ou sébacique ou des combinaisons de ces derniers et éventuellement jusqu'à 30 moles pour cent d'un second acide dicarboxylique aliphatique linéaire ayant au moins 4 atomes de carbone en chaîne droite entre les deux groupes acide, ou d'un acide dicarboxylique aromatique et

2) des motifs dérivés d'un constituant diamine et glycol qui contient 10 à 30 moles pour cent d'une diamine choisie parmi la 1,6-hexanediamine, la 1,4-cyclohexanebisméthylamine ou des combinaisons de ces dernières et 90 à 70 moles pour cent d'un glycol choisi parmi l'éthylène glycol, le 1,4-butanediol, le 1,4-cyclohexanediméthanol ou des combinaisons de ces derniers.

4. Laminé selon la revendication 1 dans lequel ledit polyesteramide a une viscosité inhérente d'au moins 0,8 dl/g et contient

1) des motifs dérivés d'un constituant acide qui contient 70 à 90 moles pour cent d'un acide dicarboxylique choisi parmi les acides adipique, pimélique, subérique, azélaïque ou sébacique et 10 à 30 moles pour cent d'un second acide dicarboxylique linéaire aliphatique ayant au moins 4 atomes de carbone en chaîne droite entre les deux groupes acide, ou d'un acide dicarboxylique aromatique et

2) des motifs dérivés d'un constituant diamine et glycol qui contient 10 à 30 moles pour cent d'une diamine choisie parmi la 1,6-hexanediamine, la 1,4-cyclohexanebisméthylamine ou des combinaisons de ces dernières et 90 à 70 moles pour cent d'un glycol choisi parmi l'éthylène glycol, le 1,4-butanediol et le 1,4-cyclohexanediméthanol ou des combinaisons de ces derniers.

5. Laminé selon l'une quelconque des revendications précédentes dans lequel ledit polyester est du polytéréphtalate d'éthylène.

6. Laminé selon l'une quelconque des revendications précédentes dans lequel ledit copolymère de l'alcool vinylique est un copolymère d'éthylène et d'alcool vinylique ayant une teneur en éthylène comprise entre 30 et 50 moles pour cent.

7. Composition de liaison utilisable dans la préparation d'un laminé selon la revendication 1 comprenant un polyesteramide tel que défini dans l'une quelconque des revendications 2 à 4.

8. Récipient fabriqué à partir du laminé selon l'une quelconque des revendications 1 à 6 dans lequel ledit polyester a été orienté.